# EUROPEAN PATENT SPECIFICATION

(11) **EP 2 696 141 B1**
(45) Date of publication and mention of the grant of the patent: **28.11.2018**
(21) Application number: 12768105.4
(22) Date of filing: 12.03.2012
(51) Int. Cl.: F23G 1/00, B09B 5/00, C05F 1/00, F23G 5/04, F23G 5/10

(54) **PROCESSING SYSTEM AND METHOD FOR STABILIZING LIVESTOCK RECLAIMED GROUND BY ON-SITE UNDERGROUND COMBUSTION**
VERARBEITUNGSSYSTEM UND VERFAHREN ZUR STABILISIERUNG VON DURCH VIEH ABGETRAGENEM BODEN DURCH ÖRTLICHE UNTERIRDISCHE VERBRENNUNG
SYSTÈME ET PROCÉDÉ DE TRAITEMENT POUR STABILISER UN TERRAIN REPRIS SUR DU BÉTAIL PAR COMBUSTION SOUTERRAINE SUR SITE

(30) Priority: 07.04.2011 KR 20110031994
(43) Date of publication of application: 12.02.2014
(73) Proprietor: Beautiful Environmental Construction Co., Ltd., Seongnam-si, Gyeonggi-do 462-721 (KR)
(72) Inventor: LEE, Jong Youl, Yeoju-gun Gyeonggi-do 469-843 (KR); LEE, Suk Young, Seongnam-si Gyeonggi-do 463-860 (KR); CHOI, Sam Yong, Anyang-si Gyeonggi-do 431-742 (KR); PARK, Heung Won, Icheon-si Gyeonggi-do 467-902 (KR); SEO, Seoung Won, Guri-si Gyeonggi-do 471-764 (KR); KANG, Sung Ho, Seoul 136-751 (KR); PARK, Young Do, Seoul 134-874 (KR)
(74) Representative: Wallin, Nicholas James
(86) International application number: PCT/KR2012/001774
(87) International publication number: WO 2012/138061

(56) References cited:
- JP-A- 2003 175 399
- JP-A- 2005 319 456
- KR-A- 20010 010 718
- KR-A- 20090 125 390
- KR-A- 20100 082 131
- KR-B1- 100 862 377
- US-A1- 2002 067 953
- US-A1- 2005 201 831

## Description

### [TECHNICAL FIELD]

The present invention relates to an oxidation treatment system of swine carcasses, cow carcasses and poultry carcasses buried in landfill sites. More particularly, the present invention relates to a stabilizing treatment technology of livestock landfill through *in situ* underground combustion by extracting leachate from the landfill where dead livestock carcasses are buried, suitably sterilizing it, and then operating installed heat-generating rods such that the livestock carcass wastes buried in the landfill can be combusted by heat within a short period of time and at the same time, an exhaust gas can be disposed by oxidation in a sanitary and environment-friendly way.

### [BACKGROUND ART]

Recently, livestock industries in each and every country have been suffered from tremendous damages due to frequent outbreaks of virus diseases such as avian influenza, mad cow diseases, swine choleras, foot-and-mouth diseases and their nationwide spread. Once it is confirmed as a viral type livestock disease, it is regulated that all the artiodactyl livestock within the distance of 500 m from originating farms shall be disposed by stamping-out burial or incineration, in order to prevent pathogens from spreading out. Hence, environmental issues such as the outflow of leachate and the discharge of air-polluting substances, depending upon the stamping-out methods, impose constant threats on the public health.

According to the data released by the Korea Ministry for Food, Agriculture, Forestry and Fisheries, the numbers of livestock that were disposed of due to foot-and-mouth diseases, mad cow diseases and avian influenza reached 150 thousands with regard to cows, 3,140 thousands with regard to pigs and 5,450 thousands with regard to Al, during the years 2010 and 2011. They were stamped out alive, and almost all the wastes from the dead livestock carcasses were disposed by burial and the number of burial sites amounted to 4,632 through 96 cities, counties, and wards nationwide.

Although the stamping-out through landfill/burial of the domestic animals that have been stricken with viral livestock diseases prevents the spread of pathogens and is a relatively cost-efficient disposal method, it requires a considerably large amount of time for biodegradation by microbes and leachate leaks out constantly during the degradation process, causing a secondary pollution. Further, the utilization of sites is limited due to soil subsidence issues in the landfills of dead carcasses.

Besides the landfill burial, there are incineration, high temperature steam treatment, and composting methods, but it is practically impossible to compost the livestock killed by highly contagious viruses because of the risk of pathogenic contagion. Furthermore, the methods of incineration and high temperature steam treatment can achieve cost efficiency only when they are carried out prior to the landfill burial. That is, if the methods of incineration or high temperature steam treatment are carried out after the already-buried wastes having been dragged out to the ground through excavation works, they may not be appropriate processes in sanitary, aesthetical, and economic aspects.

A related treatment system of waste landfill through in situ underground oxidation is disclosed in the United States Patent Application US 2005/201831 A1. In connection with stabilizing treatment of livestock landfills, the applicant filed a Korean patent application (Patent Publication No. 101131340, filed on Feb. 24, 2011) on a stabilizing treatment system technology of a livestock landfill through *in situ* underground heat carbonization which is capable of eliminating the possibility of a prolonged leachate production by actively disposing of the pollution source of leachate, and capable of utilizing sites by disposing of animal carcasses within a short period of time. In addition to this technology, the applicant is now proposing a technology relating to a stabilizing treatment system and method of livestock landfill through an *in situ* underground oxidation /combustion process.

### [DISCLOSURE]

### [TECHNICAL PROBLEMS]

It is an object of the present invention to provide a fast, economical, and safe disposal system and method of animal carcasses which are capable of solving the problems of the prior arts related to the disposal devices of buried livestock carcasses as described in the above. For this purpose, the leachate and gas generated from inside the landfills are extracted and then pre-treated through a sterilizing process and an odor elimination process, and the dead carcasses are oxidized by heating heat-generating rods installed in the underground, simultaneously with injecting and flowing air so that heat can travel inside the underground soil media, and the exhaust gas generated during the oxidation is selectively eliminated, in order to prevent leachate from spreading out to the vicinity of the landfill, and thereby secure public hygiene and increase the utilization of landfill sites by the disposal of dead livestock within a short period of time.

### [TECHNICAL SOLUTION]

In order to achieve the objects mentioned above, according to an embodiment of the present invention, there is provided a stabilizing treatment system of livestock landfill through *in situ* underground combustion comprising a heat-insulating rainwater barrier, a leachate and gas vacuum extracting treatment device (a vehicle-driven type), a carcass combustion treatment device, a monitoring device, and an installation facility support.

According to another embodiment of the present invention, there is provided a stabilizing treatment method of livestock landfill through an *in situ* underground combustion comprises a pre-treatment step for lowering an underground water level in order to increase the efficiency of underground combustion process and treating leachate from buried animal carcasses; a temperature-rising step for providing heat continuously through heat-generating rods to the vicinity of the landfill where the animal carcasses are buried, and thereby forming a condition in which moisture possessed by the carcasses and soil pore water can be dried; a drying step for drying the moisture possessed by the carcasses and the soil pore water so that an efficient combustion can occur; a combustion step for combusting the dried animal carcasses with an oxygen contained in the air to be injected, such that the dried animal carcasses themselves can become heat sources and the heat can spread out to their vicinity; and a heat stabilizing step for completing the combustion by the absence of substances to be burned after the complete combustion of the animal carcasses.

According to a preferred embodiment of the present invention, the heat-insulating rainwater barrier is constructed such that it can make a rainfall flow into rainwater exclusion paths (ditches) installed in the surrounding areas during the period of landfill stabilizing operation, and it is composed of heat insulating materials (ceramic fibers, etc.) which can minimize the heat loss of heat-generating rods by shielding the whole surface of the landfill.

Moreover, since the leachate produced from the dead carcasses and the underground water flowed into the buried area should be extracted and treated in the first place, a soil pollution recovery device of vehicle-driven type disclosed in the Korean patent application (Laid-Open No. 10-2002-0082974) filed by the applicant and further equipped with an instant high-temperature sterilizing treatment apparatus for sterilization of pathogenic microorganisms including viruses may be used as the leachate and gas vacuum extracting treatment device,

The carcass combustion treatment device is installed with a plurality of heat-generating rods, depending upon the width of area to be treated, and is connected to a generator to dry the moisture, blood and oil components of the dead carcasses and oxidize the dead carcasses using electrical energy. An outer skin which protects heat-generating coils is installed on the outside of the heat-generating rod.

The leachate and gas vacuum extracting treatment device (a vehicle-driven type) is a device of simultaneously extracting the gas and liquid generated during the oxidation under a reduced pressure. The simultaneously-extracted gas and liquid are sent to a simple high-speed oxidation treatment apparatus and a high temperature sterilization treatment apparatus each of which is coupled with the vacuum extraction device. Extraction tube wells and heat-generating rods for the treatment of the leachate and gas are installed with installation facility supports to secure structural stability in case of soil subsidence.

Further, sensors attached to each tube well are connected to a monitoring device which is attached to a vehicle-driven purification device so that they can be controlled automatically or manually for the control of operation factors.

### [ADVANTAGEOUS EFFECTS]

Since the stabilizing treatment technology of livestock landfill through an *in situ* underground combustion of the present invention constructed as described above make it possible to prevent underground water pollution due to the outflow of leachate by fundamentally eliminating the discharge source of leachate, and to oxidize and combust dead livestock in a stable way, it is cost-efficient when compared with the leachate treatment technologies and the heat carbonization-based stabilizing treatment technology of livestock landfill which require a long-term monitoring and maintenance. Further, it can prevent and improve the problems of workers' being exposed to contagious viruses since it does not require an excavation process and a facility to incinerate the dead livestock that has already been buried.

### [BRIEF DESCRIPTION OF THE DRAWINGS]

Fig. 1 shows an overall structure of a stabilizing treatment system of livestock landfill through *in situ* underground oxidation (combustion) according to the present invention.
Fig. 2 shows a heat-insulating rainwater barrier facility according to the present invention.
Fig. 3 shows a mobile leachate and gas vacuum extracting treatment device according to the present invention.
Fig. 4 shows a carcass oxidation (combustion) treatment device according to the present invention.
Fig. 5 shows a high-speed oxidation treatment apparatus according to the present invention.
Fig. 6 shows an installation facility support according to the present invention.
Fig. 7 is a diagram illustrating an underground water level control system according to the present invention.
Fig. 8 illustrates a stabilizing treatment process of livestock landfill through *in situ* underground oxidation (combustion) according to the present invention.
Figs. 9 (a), (b) are graphs showing heat treatment effect (temperature increase) in the underground in the vicinity of heat-generating rods after a heater was turned on according to the present invention.
Figs. 10 (a), (b) are graphs showing temperature results measured in the vicinity area when heat-generating rods were operated while air was being injected into the heat-generating rods and air was being flowed into the landfill according to the present invention.

### Description of Reference Numerals

1: Heat-insulating rainwater barrier
1-1: Ceramic fiber
1-2: Clay layer
2: Leachate and gas vacuum extracting treatment device
2-1: Gas and liquid separator
2-2: High-temperature sterilizing treatment apparatus
2-3: Vacuum pump
2-4: Extraction tube well
2-4-1: Extraction tube well for underground water level control in the outside of landfill
2-5: Measurement tube well for underground water level control in the outside of landfill
2-6: High-speed oxidation treatment apparatus
2-7: Condenser
2-8: Discharge device
3: Carcass combustion treatment device
3-1: Heat-generating rod
3-2: Generator
3-3: Outer skin
3-4: Heat-generating coil
3-5: Carbon steel pipe
3-6: Hole
3-7: Ignition device
3-8: Control panel
4: Monitoring device
5: Installation facility support

### [MODES OF THE INVENTION]

Hereinafter, the preferred embodiments of the present invention will be described in detail with reference to the drawings.

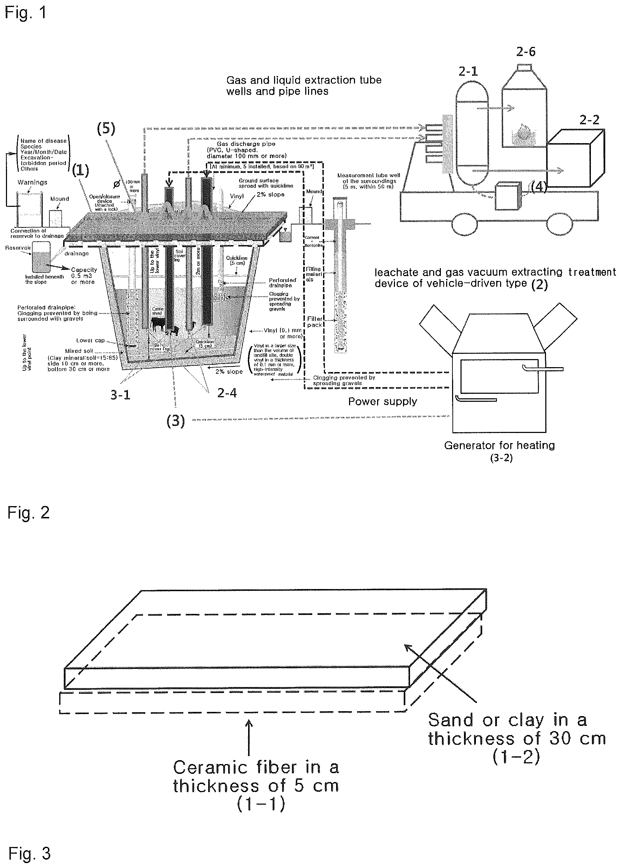

Fig. 1 shows an overall structure of a stabilizing treatment system of livestock landfill through *in situ* underground combustion according to the present invention.

The stabilizing treatment system of livestock landfill through *in situ* underground combustion according to the present invention comprises a heat-insulating rainwater barrier (1), a leachate and gas vacuum extracting treatment device (a vehicle-driven type) (2), a carcass combustion treatment device (3), a monitoring device (4), and an installation facility support (5) as shown in Fig. 1, whereby the dead livestock buried in the landfill can be disposed in an environment-friendly and hygienic way by being transformed into harmless forms through a series of combustion treatment devices including a rainwater barrier facility, leachate treatment process, dead livestock oxidation process, and gas and liquid vacuum separation treatment process.

The stabilizing treatment system of livestock landfill through *in situ* underground combustion according to the present invention will be described in detail with regard to individual constitutional devices in the followings.

The heat-insulating rainwater barrier (1) is constructed to make rainfall flow into rainwater exclusion paths (ditches) which are installed in the surrounding areas during the operation, and it is constituted with heat-insulating materials which can minimize the heat loss of heat-generating rods by shielding the whole surface of the landfill.

The leachate and gas vacuum extracting treatment device (2) is obtained by attaching a simple high-speed oxidation treatment apparatus (2-6) or a high-temperature sterilizing treatment apparatus (2-2) to a pollution soil recovery device of vehicle-driven type disclosed in Korean Patent Laid-Open No. 10-2002-0082974 filed by the same inventors of the present application.

The carcass combustion treatment device (3) is installed with a plurality of heat-generating rods (3-1), depending upon the areas to be treated, which are connected to a generator (3-2) to dry and heat the moisture, blood and oil components of the dead carcasses using electrical energy along with the air injected from the outside, and thereby combust the dead carcasses. Also, an outer skin (3-3) to protect heat-generating coils (3-4) is installed on the outside of each heat-generating rod (3-1).

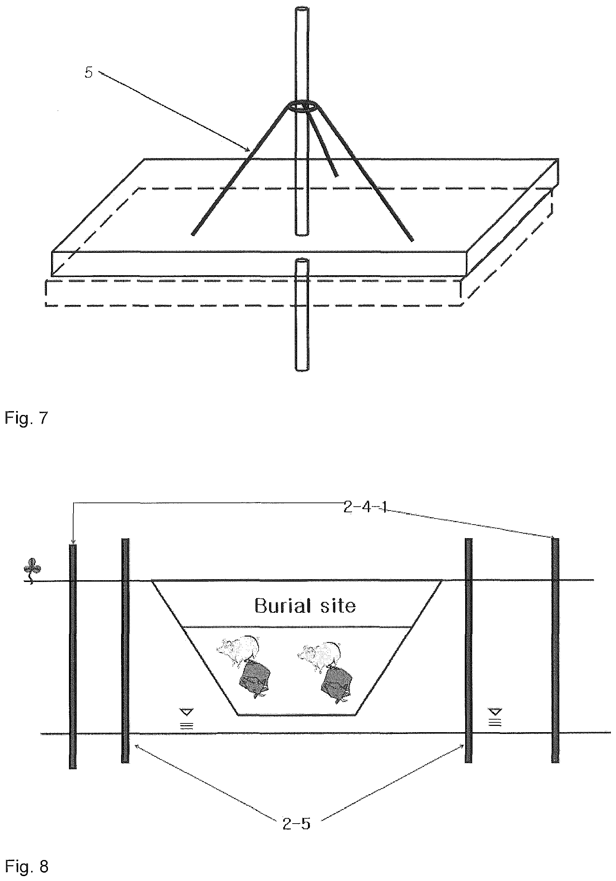

The leachate and gas vacuum extracting treatment device (a vehicle-driven type) (2) is to extract the gas and liquid which have been generated during the oxidation under a reduced pressure, wherein the liquid vacuum-extracted through a gas and liquid separator (2-1) is sent to a high-temperature sterilizing treatment apparatus (2-2) and the gas is sent to a simple high-speed oxidation treatment apparatus (2-6). Heat-generating rods (3-1) and extraction tube wells (2-4) for the treatment of the leachate and gas are installed along with an installation facility support (5) for maintaining their structural stability in case of soil subsidence, and each extraction tube wells (2-4) to which gauges are attached can be controlled automatically or manually for the control of operation factors. Also, the leachate and gas vacuum extracting treatment device (a vehicle-driven type) (2) may include a measurement tube well (2-5) (see Fig. 7) for underground water level control in the outside of landfill, a high-speed oxidation treatment apparatus (2-6), a condenser (2-7), and a discharge device (2-8) (see Fig. 3).

In addition, various kinds of sensors which can monitor the pressures and temperature of a landfill are installed to secure the stability of operation in advance.

All the tools and machines used in the stabilizing treatment are subject to sterilizing treatment after the completion of the process to prevent pathogens from being spread over the other areas in advance.

Fig. 2 illustrates a heat-insulating rainwater barrier (1) according to the present invention, wherein the barrier (1) comprises a ceramic fiber (1-1) formed in a blanket shape and a sand or clay layer (1-2) for the protection of heat-insulating materials. The ceramic fiber (1-1) is installed on the surface of a landfill in a purification zone to prevent heat from diffusing to a ground level and shield off the penetration of rainwater when it rains during the period of operation. Further, on the top of the ceramic fiber (1-1) is installed the clay layer (1-2) for the protection of heat-insulating materials, which is made of clays and sands in the thickness of 30 cm or more. The heat-insulating rainwater barrier (1) is to prevent the inflow of rainwater into the landfill and to increase the efficiency of oxidation process, and at the same time it may function to preliminarily prevent ground subsidence or exposure of buried objects which may happen during the process. Of course, the same kind of heat-insulating rainwater barrier may be installed on the bottom surface of landfill at the beginning of burial.

Fig. 3 shows a leachate and gas vacuum extracting treatment device of vehicle-driven type equipped with a vacuum pump (2-3), a gas and liquid separator (2-1), a high-temperature sterilizing treatment apparatus (2-2), a monitoring device (4), and a discharge device (2-8), wherein the leachate in the inside of landfill is pumped up through a vacuum pump (2-3) to be transferred to the gas and liquid separator (2-1) which is mounted on the vehicle. A sensor that can measure an amount of liquid and a pump are installed in the inside of the gas and liquid separator, such that the amount of liquid can be maintained constantly at the predetermined level. The gas and liquid separator is a separation system in a combined form of a cyclone that can separate gas from liquid using their centrifugal force and a vane plate separation technology where separation efficiency is increased by efficiently increasing the particle size of mists at the surface of flat planes. The leachate in the phase of liquid separated by the gas and liquid separator is transferred to the high-temperature sterilizing treatment apparatus, and the sterilized leachate by the high-temperature sterilizing treatment apparatus is subject to appropriate water treatment processes to be finally disposed. Also, bad odors and other substances in the phase of gas are subject to oxidation in a high-speed oxidation treatment apparatus (2-6) which is *in situ* installed, and then they are discharged in odorless and safe forms.

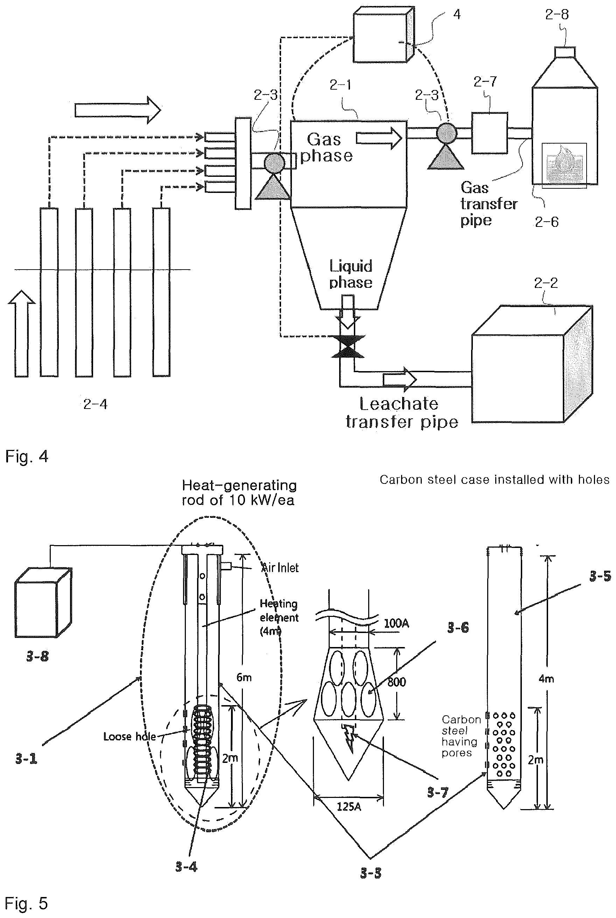

Fig. 4 illustrates a carcass combustion treatment device (3), which includes heat-generating rods (3-1) each of which can consume 10 kW-electric power at the maximum and a control panel (3-8) by which the temperatures of heat-generating rods (3-1) can be controlled in a range of 200∼850 °C.

Particularly, it should be noted as a key conception of the invention that the combustion device for complete combustion which had not been accomplished in the heat carbonization technology patent filed by the applicant is newly provided in the present invention.

That is, air is injected through an air inlet provided on the top of the heat-generating rods, simultaneously with the operation of the heat-generating rods, and additionally, air is flowed into the underground, such that the ascended heat can permeate among soil media, i.e., soil gaps, and animal carcasses to combust them.

In order to achieve the purpose of the combustion process, a vehicle-mounted vacuum pump (2-3) is operated simultaneously with the operation of the combustion process to extract the air that has been combusted in the underground to the ground above. There is an advantage that the tube wells which are already installed for the treatment of leachate may be used as the air extraction tube wells (2-4) for this extraction process, and they (2-4) may be readily removed or added, if necessary.

The number of the heat-generating rods (3-1) to be installed may be adjusted, depending upon the area and volume of a landfill, and heat-generating coils (3-4) are mounted up to the height of 2 m from the lower end of the heat-generating rods (3-1) to be protected by carbon steel pipes (3-5). Further, in order to maximize the heat transfer power of the heat-generating rods (3-1), the carbon steel pipes (3-5) are punched with holes (3-6) each of which has a diameter of 4 cm in an interval of 5 cm so that the heat generated from the heat-generating coils (3-4) can be properly supplied to the dead livestock.

Generally, the air heated by the heat-generating rod at a high temperature of 300°C to 500°C or so is transmitted through gaps of underground soil media, and thereby each heat-generating rod may have a combustion range of about 80cm to 160cm.

Fig. 5 illustrates a high-speed oxidation treatment apparatus (2-6), wherein the exhaust gas and vapors generated during the oxidation treatment are transferred to a simple high-speed oxidation treatment apparatus where bad odors, nitrogen oxides and sulfur compounds are finally disposed with oxidation, via a gas and liquid separator (2-1) which is installed in a vehicle-driven apparatus, a high-speed high-temperature sterilizing treatment apparatus (2-2), and a condenser (2-7). As a high-speed oxidation treatment apparatus (2-6), a commercially available product may be adopted. Also, it is operated at a temperature of 850°C and instantly performs the complete combustion of exhaust gas.

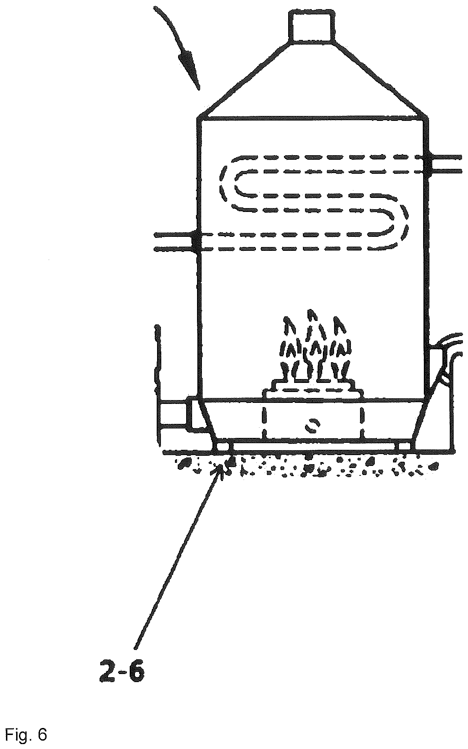

Fig. 6 is a diagram showing an example of installation facility supports (5), which are coupled with the heat-generating rods (3-1) and the extraction tube wells (2-4), in order to secure stabilities of them and prevent purification facilities from being fallen or damaged due to soil subsidence that might happen during the operation of the process.

Fig. 7 is a diagram illustrating an underground water level control system, which can constantly control the water level of the inside of a landfill not to be in contact with the heat-generating rods by installing measurement tube wells (2-5) and underground water extraction tube wells (2-4-1) in the outside of the landfill, in order to prevent a decrease in the efficiency of the oxidation process due to the inflow of underground water from the outside of the landfill during the process.

So far, the stabilizing treatment system of livestock landfill through *in situ* underground combustion in accordance with one embodiment of the present invention has been described, and hereinafter a stabilizing treatment method of livestock landfill through an *in situ* underground combustion using this system according to the present invention will be explained.

Fig. 8 illustrates a stabilizing treatment process of livestock landfill through *in situ* underground combustion according to the present invention. As illustrated in Fig. 8, the stabilizing treatment method of livestock landfill through *in situ* underground combustion according to this invention comprises a pre-treatment step; a temperature-rising step; a drying step; a combustion step; and a heat stabilizing step, and thereby it brings an improvement in which heat transfer among underground soil media can be efficiently achieved by injecting air or a slight amount of pure oxygen through an air inlet which is formed on the top of heat-generating rod, simultaneously with the operation of the heat-generating rods installed in livestock landfill, and additionally by flowing air into the livestock landfill.

Hereinafter, each step will be explained in detail. In the pre-treatment step, an underground water level is lowered in order to increase the efficiency of an underground combustion process, and the leachate generated from buried animal carcasses is treated. In the temperature-rising step, heat is continuously provided to the vicinity of the landfill where the animal carcasses are buried through heat-generating rods by injecting air along with the operation of the heat-generating rods, in order to form a condition (∼100°C) in which moisture possessed by the carcasses and soil pore water can be dried. In the drying step, the moisture possessed by the carcasses and the soil pore water is evaporated by maintaining the temperature at 100°C or so such that a combustion can occur efficiently. In the combustion step, the dried animal carcasses are combusted in a temperature range of 200∼850°C with an oxygen contained in the air to be flowed in the surroundings of carcasses or a pure oxygen in a slight amount to be injected in order to increase combustion efficiency, and then, the animal carcasses themselves become a heat source such that heat spreads out to their vicinity. Lastly, in the heat stabilizing step, the combustion is completed due to the absence of substances to be burned after the complete combustion of the animal carcasses at a temperature of 100∼250°C. If possible, it is preferable to collect and discharge combustion gases between these steps, and then, oxidize them. A slight amount of CO, NOx and SOx is produced between the combustion step and the heat stabilizing step.

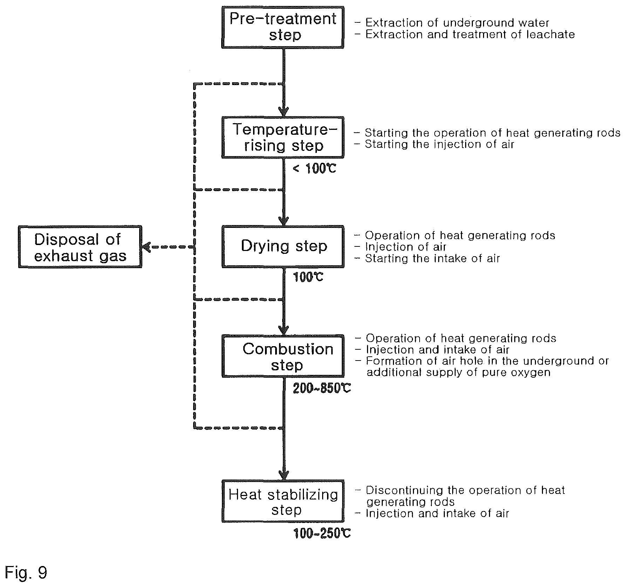

Figs. 9(a), (b) are graphs showing heat treatment effects (temperature increase) in the underground in case that air intake was carried out approximately 20 hours after a heat source was sufficiently formed in the vicinity of heat-generating rods by injecting air in a state of maintaining the surface temperature of the heat-generating rods at 500∼700°C with a heater being turned on, wherein (a) shows heat treatment effects at a location away from a heat-generating rod by 40 cm and (b) shows heat treatment effects at a location away by 60 cm. They show that temperature was more rapidly increased when air injection (in the heat-generating rods) and air intake (in the underground landfill) were carried out together than when only air injection was carried out, such that it could maximize combustion effects by the dry combustion of animal carcasses buried in the underground.

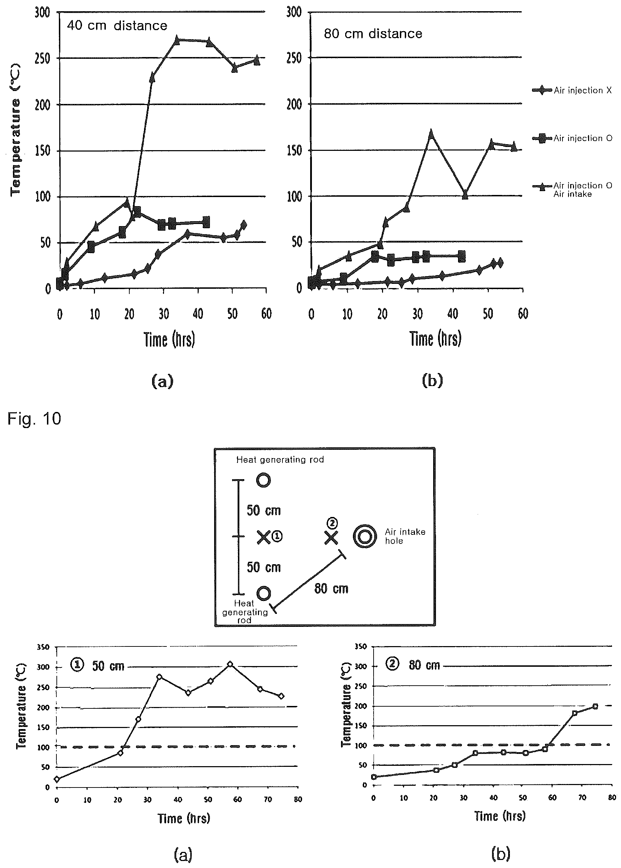

Figs. 10(a), (b) are graphs showing temperature measurement results after the operation of the system for 4 days in a state of maintaining the surface temperature of heat-generating rods at 500∼700°C, using the treatment method of the present invention, i.e., the technology that heat transfer within the underground soil media can be efficiently achieved by injecting air or a slight amount of pure oxygen into an air inlet formed on the top of heat-generating rods, simultaneously with the operation of the heat-generating rods installed in livestock landfill, and additionally by flowing air into the livestock landfill. Fig. 10 (a) is a result at a location away from the heat-generating rod by 50 cm, and Fig. 10 (b) is a result at a location away by 80 cm. They show the fact that as a distance from the heat generating rods became closer, the temperature increased more quickly, depending upon the passage of time, such that the drying, combustion and heat stabilizing steps were smoothly carried out. In particular, it shows that at the location away from the heat-generating rod by 50 cm, temperature increased to 250°C or higher after 30 hours and combustion was carried out vigorously, and after then it was followed by the final heat stabilizing step as 70 hours passed. Accordingly, when considering economical aspects, it is suitable to have an individual combustion range of about 40 to 80 cm from a heat generating rod, that is, to arrange heat-generating rods adjacent to each other to be spaced in a distance of 80 to 160 cm for combustion treatment.

The present invention has been described above with reference to optimum embodiments. However, it is apparent that variations or equivalent embodiments by those skilled in the art can be effected within the scope of the present invention described in the above. Therefore, the true scope of right of the present invention should be determined by the technical ideas provided in the appended claims.

### [INDUSTRIAL APPLICABILITY]

The stabilizing treatment technology of livestock landfill through *in situ* underground combustion of the present invention makes it possible to prevent underground water pollution due to the outflow of leachate by fundamentally eliminating the discharge source of leachate, and to combust dead livestock in a stable way. Thus, it is cost-efficient when compared with the leachate treatment technologies and heat carbonization-based stabilizing treatment technology of livestock landfill which require a long-term monitoring and maintenance, and further it can prevent and improve risks of workers' being exposed to contagious viruses since it does not require an excavation process or a facility to incinerate the dead livestock that has been already buried.

## Claims

1. A stabilizing treatment system of livestock landfill through *in situ* underground combustion for disposing swine carcasses, cow carcasses and poultry carcasses buried in a landfill, comprising:
a heat-insulating rainwater barrier (1) for shielding rainwater;
a leachate and gas vacuum extracting treatment device (2) for treating the leachate and gas from the heat-insulating rainwater barrier by vacuum extraction;
a carcass combustion treatment device (3) for combusting the livestock carcasses buried in the landfill;
a monitoring device (4) for monitoring underground livestock carcasses buried in the landfill; and
an installation facility support (5) for supporting the above devices in a stable way,
wherein the carcass combustion treatment device (3) has a plurality of heat-generating rods (3-1) depending on the areas to be treated, and a generator (3-2) connected to the heat-generating rods (3-1), such that the carcass combustion treatment device (3) dries the moisture, blood and oil components of the carcasses by providing heat through the heat-generating rods (3-1) and oxidizes the carcasses.

2. A stabilizing treatment system of livestock landfill through *in situ* underground combustion of claim 1, wherein the heat-insulating rainwater barrier (1) comprises a ceramic fiber (1-1) made in a blanket form and a clay layer (1-2) for the protection of a heat insulating material.

3. A stabilizing treatment system of livestock landfill through *in situ* underground combustion of claim 1, wherein the leachate and gas vacuum extracting treatment device (2) comprises a gas and liquid separator (2-1) for extracting the gas and liquid produced during oxidation under a reduced pressure, a high-temperature sterilizing treatment apparatus (2-2) for sterilizing the liquid vacuum-extracted at a high temperature, a vacuum pump (2-3), a plurality of extraction tube wells (2-4) for the treatment of the leachate and gas, a plurality of measurement tube wells (2-5) for underground water level control in the outside of landfill, a high-speed oxidation treatment apparatus (2-6), a condenser (2-7), and a discharge device (2-8).

4. A stabilizing treatment system of livestock landfill through *in situ* underground combustion of claim 1, wherein the carcass combustion treatment device (3) further comprises a control panel (3-8) for controlling the temperature of heat-generating rods (3-1), and simultaneously with the operation of the heat-generating rods (3-1), air is injected through an air inlet provided on the top of the heat-generating rods (3-1) such that high-temperature air heated in the heat-generating rods (3-1) travels through gaps of underground soil media to oxidize animal carcasses.

5. A stabilizing treatment system of livestock landfill through *in situ* underground combustion of claim 4, wherein an outer skin (3-3) is installed on the outside of the heat-generating rod (3-1).

6. A stabilizing treatment system of livestock landfill through *in situ* underground combustion of claim 4, wherein the heat-generating rods (3-1) can be adjusted in a temperature range of 200°C to 850°C.

7. A stabilizing treatment system of livestock landfill through *in situ* underground combustion of claim 4, wherein the heat-generating rods (3-1) are equipped with heat-generating coils (3-4) up to the height of 2 m from the lower end of the heat-generating rods (3-1), and the heat-generating coils (3-4) are protected by carbon steel pipes (3-5).

8. A stabilizing treatment system of livestock landfill through *in situ* underground combustion of claim 7, wherein in order to maximize the heat transfer power of the heat-generating rods (3-1), the carbon steel pipes (3-5) are punched with holes (3-6) each having a diameter of 4 cm in an interval of 5 cm from each other so that the heat generated from the heat-generating coils (3-4) can be properly supplied to dead livestock.

9. A stabilizing treatment system of livestock landfill through *in situ* underground combustion of claim 3, wherein each extraction tube well (2-4) of the gas and liquid vacuum extraction device (2) is equipped with a gauge such that it is controlled automatically or manually for the control of operation factors.

10. A stabilizing treatment method of livestock landfill through *in situ* underground combustion for disposing swine carcasses, cow carcasses and poultry carcasses buried in a landfill by combustion using a stabilizing treatment system of livestock landfill according to any one of claims 1 to 9, which comprises,
a pre-treatment step for lowering an underground water level in order to increase the efficiency of an underground combustion process and treating leachate from buried animal carcasses;
a temperature-rising step for injecting air simultaneously with the operation of a plurality of heat-generating rods (3-1) installed in the underground landfill, and providing constant heat to the vicinity of the buried animal carcasses through the heat-generating rods (3-1) to form a condition (-100°C) in which moisture possessed by the carcasses and soil pore water can be dried;
a drying step for supplying heat continuously in a state of maintaining the temperature of 100°C or so to evaporate the moisture possessed by the carcasses and the soil pore water such that an efficient combustion can occur;
a combustion step for combusting the dried animal carcasses in a temperature range of 200∼850°C through an oxygen contained in the air to be flowed in the vicinity or a slight amount of pure oxygen injected in order to further increase combustion efficiency, wherein the animal carcasses themselves become a heat source such that heat spreads out to their vicinity; and,
a heat stabilizing step for completing the combustion at a temperature of 100-250 °C by the absence of substances to be burned after the complete combustion of the animal carcasses.

11. A stabilizing treatment method of livestock landfill through *in situ* underground combustion of claim 10, wherein between the said steps, the combustion gas is collected, discharged and then treated by oxidation.

12. A stabilizing treatment method of livestock landfill through *in situ* underground combustion of claim 10, further comprising spacing the plurality of heat-generating rods (3-1) with respect to each other in a range of 80 ∼ 160 cm.

## Patentansprüche

1. System zur stabilisierenden Behandlung von Tierkörperdeponien durch lokale unterirdische Verbrennung zur Entsorgung von Schweinekadavern, Rinderkadavern und Geflügelkadavern, die in einer Deponie vergraben sind, umfassend:
eine wärmeisolierende Regenwasserbarriere (1) zum Abschirmen von Regenwasser;
eine Einrichtung zur Vakuumextraktionsbehandlung für Sickerwasser und Gas (2) zur Behandlung des Sickerwasssers und Gases aus der wärmeisolierenden Regenwasserbarriere durch Vakuumextraktion;
eine Kadaververbrennungs-Behandlungseinrichtung (3) zur Verbrennung der in der Deponie vergrabenen Viehkadaver;
eine Überwachungseinrichtung (4) zur Überwachung von unterirdischen, in der Deponie vergrabenen Viehkadavern und
eine Anlagenabstützung (5) zum stabilen Stützen der obigen Einrichtungen,
wobei die Kadaververbrennungs-Behandlungseinrichtung (3) abhängig von den zu behandelnden Bereichen eine Vielzahl von wärmeerzeugenden Stäben (3-1) und einen Generator (3-2) hat, der mit den wärmeerzeugenden Stäben (3-1) verbunden ist, so dass die Kadaververbrennungs-Behandlungseinrichtung (3) die Feuchtigkeits-, Blut- und Ölkomponenten der Kadaver durch Zufuhr von Wärme durch die wärmeerzeugenden Stäbe (3-1) trocknet und die Kadaver oxidiert.

2. System zur stabilisierenden Behandlung von Tierkörperdeponien durch lokale unterirdische Verbrennung nach Anspruch 1, wobei die wärmeisolierende Regenwasserbarriere (1) eine keramische Faser (1-1), die in einer Deckenform gebildet ist, und eine Tonschicht (1-2) zum Schutz eines wärmeisolierenden Materials umfasst.

3. System zur stabilisierenden Behandlung von Tierkörperdeponien durch lokale unterirdische Verbrennung nach Anspruch 1, wobei die Einrichtung zur Vakuumextraktionsbehandlung für Sickerwasser und Gas (2) einen Gas-Flüssigkeits-Separator (2-1) zum Extrahieren des Gases und der Flüssigkeit, die während der Oxidation erzeugt sind, unter verringertem Druck, eine Hochtemperatur-Sterilisationsbehandlungsvorrichtung (2-2) zum Sterilisieren der bei einer hohen Temperatur vakuumextrahierten Flüssigkeit, eine Vakuumpumpe (2-3), eine Vielzahl von Extraktionsrohrschächten (2-4) für die Behandlung des Sickerwasssers und Gases, eine Vielzahl von Messrohrschächten (2-5) für die Kontrolle des Untergrundwasserspiegels um die Deponie, eine Schnelloxidationsbehandlungsvorrichtung (2-6), einen Kondensator (2-7) und eine Ausleitungseinrichtung (2-8) umfasst.

4. System zur stabilisierenden Behandlung von Tierkörperdeponien durch lokale unterirdische Verbrennung nach Anspruch 1, wobei die Kadaververbrennungs-Behandlungseinrichtung (3) ferner eine Steuertafel (3-8) zum Steuern der Temperatur der wärmeerzeugenden Stäbe (3-1) umfasst, und gleichzeitig mit dem Betrieb der wärmeerzeugenden Stäbe (3-1) Luft durch einen Lufteinlass eingeleitet wird, der oben an den wärmeerzeugenden Stäben (3-1) vorgesehen ist, so dass Heißluft, die in den wärmeerzeugenden Stäben (3-1) erhitzt ist, durch Zwischenräume in unterirdischen Bodenmedien tritt, um Viehkadaver zu oxidieren.

5. System zur stabilisierenden Behandlung von Tierkörperdeponien durch lokale unterirdische Verbrennung nach Anspruch 4, wobei außen an dem wärmeerzeugenden Stab (3-1) eine Außenhaut (3-3) angebracht ist.

6. System zur stabilisierenden Behandlung von Tierkörperdeponien durch lokale unterirdische Verbrennung nach Anspruch 4, wobei die wärmeerzeugenden Stäbe (3-1) in einem Temperaturbereich von 200°C bis 850°C einstellbar sind.

7. System zur stabilisierenden Behandlung von Tierkörperdeponien durch lokale unterirdische Verbrennung nach Anspruch 4, wobei die wärmeerzeugenden Stäbe (3-1) mit wärmeerzeugenden Spulen (3-4) bis zu der Höhe von 2 m von dem unteren Ende der wärmeerzeugenden Stäbe (3-1) ausgestattet sind und die wärmeerzeugenden Spulen (3-4) durch Carbonstahlrohre (3-5) geschützt sind.

8. System zur stabilisierenden Behandlung von Tierkörperdeponien durch lokale unterirdische Verbrennung nach Anspruch 7, wobei zur Maximierung der Wärmeübertragungsleistung der wärmeerzeugenden Stäbe (3-1) die Carbonstahlrohre (3-5) mit Löchern (3-6) mit jeweils einem Durchmesser von 4 cm in einem Abstand von 5 cm voneinander versehen sind, so dass die aus den wärmeerzeugenden Spulen (3-4) erzeugte Wärme korrekt Tierkörpern zugeführt werden kann.

9. System zur stabilisierenden Behandlung von Tierkörperdeponien durch lokale unterirdische Verbrennung nach Anspruch 3, wobei jeder Extraktionsrohrschacht (2-4) der Vakuumextraktionseinrichtung (2) für Gas und Flüssigkeit in der Weise mit einem Messwerkzeug ausgerüstet ist, dass derselbe automatisch oder manuell zur Steuerung von Betriebsfaktoren gesteuert ist.

10. Verfahren zur stabilisierenden Behandlung von Tierkörperdeponien durch lokale unterirdische Verbrennung zur Entsorgung von Schweinekadavern, Rinderkadavern und Geflügelkadavern, die in einer Deponie vergraben sind, durch Verbrennung mithilfe eines Systems zur stabilisierenden Behandlung von Tierkörperdeponien gemäß einem der Ansprüche 1 bis 9, wobei das Verfahren umfasst:
einen Vorbehandlungsschritt zur Absenkung eines Untergrundwasserspiegels, um den Wirkungsgrad eines unterirdischen Verbrennungsprozesses zu erhöhen, und zur Behandlung von Sickerwassser aus vergrabenen Tierkadavern;
einen Temperaturerhöhungsschritt zum Einleiten von Luft gleichzeitig mit dem Betrieb einer Vielzahl von wärmeerzeugenden Stäben (3-1), die in der unterirdischen Deponie installiert sind, und Zufuhr konstanter Wärme in die Umgebung der vergrabenen Tierkadaver durch die wärmeerzeugenden Stäbe (3-1), um eine Bedingung (∼100°C) zu schaffen, in der Feuchtigkeit der Kadaver und Porenwasser getrocknet werden können;
einen Trocknungsschritt zum kontinuierlichen Zuführen von Wärme in einem Zustand, in dem die Temperatur von etwa 100°C beibehalten wird, um die Feuchtigkeit der Kadaver und das Porenwasser zu verdampfen, so dass eine effiziente Verbrennung erfolgen kann;
einen Verbrennungsschritt zur Verbrennung der getrockneten Tierkadaver in einem Temperaturbereich von 200 - 850 °C durch einen Sauerstoff, der in der Luft enthalten ist, die in die Umgebung zu leiten ist, oder eine geringe Menge reinen Sauerstoffs, der eingeleitet wird, um den Wirkungsgrad der Verbrennung weiter zu erhöhen, wobei die Tierkadaver selbst in der Weise zu einer Wärmequelle werden, dass sich die Wärme in ihre Umgebung ausbreitet; und
einen Wärmestabilisierungsschritt zur Beendigung der Verbrennung bei einer Temperatur von 100-250°C durch das Fehlen von zu verbrennenden Stoffen nach der vollständigen Verbrennung der Tierkadaver.

11. Verfahren zur stabilisierenden Behandlung von Tierkörperdeponien durch lokale unterirdische Verbrennung nach Anspruch 10, wobei zwischen den Schritten das Verbrennungsgas aufgefangen, ausgeleitet und dann durch Oxidation behandelt wird.

12. Verfahren zur stabilisierenden Behandlung von Tierkörperdeponien durch lokale unterirdische Verbrennung nach Anspruch 10, das ferner umfasst, die Vielzahl von wärmeerzeugenden Stäben (3-1) in Bezug zueinander in einem Bereich von 80 - 160 cm zu beabstanden.

## Revendications

1. Système de traitement de stabilisation d'un site d'enfouissement de bétail par combustion souterraine in situ pour permettre de se débarrasser de carcasses de porc, de carcasses de bovins et de carcasses de volailles enterrées dans un site d'enfouissement comprenant :
- une barrière d'isolation thermique des eaux de pluie (1) formant écran contre les eaux de pluie,
- un dispositif de traitement par extraction sous vide (2) des eaux de lessivage et des gaz permettant de traiter les eaux de lessivage et les gaz provenant de la barrière d'isolation thermique des eaux de pluie par extraction sous vide,
- un dispositif de traitement par combustion des carcasses (3) permettant de brûler les carcasses de bétail enterrées dans le site d'enfouissement,
- un dispositif de surveillance (4) permettant de surveiller les carcasses de bétail souterraines enterrées dans le site d'enfouissement, et
- un support d'équipements (5) permettant de supporter les dispositifs susmentionnés d'une façon stable,
système dans lequel,
le dispositif de traitement des carcasses par combustion (3) comporte un ensemble de tiges de génération de chaleur (3-1) dépendant des zones à traiter et un générateur (3-2) connecté aux tiges de génération de chaleur (3-1) de sorte que le dispositif de traitement par combustion des carcasses (3) sèche les composés d'humidité, de sang et d'huile des carcasses en fournissant de la chaleur par les tiges de génération de chaleur (3-1) et oxyde les carcasses.

2. Système de traitement de stabilisation d'un site d'enfouissement de bétail par combustion souterraine in situ conforme à la revendication 1, dans lequel,
la barrière d'isolation thermique des eaux de pluie (1) comporte une fibre céramique (1-1) réalisée sous la forme d'une couverture et une couche d'argile (1-2) permettant la protection du matériau d'isolation thermique.

3. Système de traitement de stabilisation d'un site d'enfouissement de bétail par combustion souterraine in situ conforme à la revendication 1, dans lequel,
le dispositif de traitement par extraction sous vide (2) des eaux de lessivage et des gaz comporte un séparateur de gaz et de liquides (2-1) permettant d'extraire les gaz et les liquides produits en cours d'oxydation sous une pression réduite, un appareil de traitement de stérilisation à haute température (2-2) permettant de stabiliser les liquides extraits sous vide à température élevée, une pompe à vide (2-3), un ensemble de puits tubulaires d'extraction (2-4) permettant le traitement des eaux de lessivage et des gaz, un ensemble de puits tubulaires de mesure (2-5) permettant de commander le niveau des eaux souterraines à l'extérieur du site d'enfouissement, un appareil de traitement par oxydation à vitesse élevée (2-6), un condenseur (2-7) et un dispositif d'évacuation (2-8).

4. Système de traitement de stabilisation d'un site d'enfouissement de bétail par combustion souterraine in situ conforme à la revendication 1, dans lequel,
le dispositif de traitement par combustion des carcasses (3) comporte en outre un panneau de commande (3-8) permettant de commander la température des tiges de génération de chaleur (3-1), et, simultanément au fonctionnement des tiges de génération de chaleur (3-1) de l'air est injecté par une entrée située à la partie supérieure des tiges de génération de chaleur (3-1) de sorte que de l'air à haute température chauffé dans les tiges de génération de chaleur (3-1) passe au travers d'intervalles situés dans le sol souterrain pour oxyder les carcasses animales.

5. Système de traitement de stabilisation d'un site d'enfouissement de bétail par combustion souterraine in situ conforme à la revendication 4, dans lequel,
une peau externe (3-3) est située sur le côté externe des tiges de génération de chaleur (3-1).

6. Système de traitement de stabilisation d'un site d'enfouissement de bétail par combustion souterraine in situ conforme à la revendication 4, dans lequel,
les tiges de génération de chaleur (3-1) peuvent être réglées dans une plage de température de 200° à 850°C.

7. Système de traitement de stabilisation d'un site d'enfouissement de bétail par combustion souterraine in situ conforme à la revendication 4, dans lequel,
les tiges de génération de chaleur (3-1) sont équipées de serpentins de génération de chaleur (3-4) jusqu'à une hauteur de 2 mètres à partir de leur extrémité inférieure et les serpentins de génération de chaleur (3-4) sont protégés par des tubes en acier au carbone (3-5).

8. Système de traitement de stabilisation d'un site d'enfouissement de bétail par combustion souterraine in situ conforme à la revendication 7, dans lequel,
pour rendre maximum la puissance de transfert de chaleur des tubes de génération de chaleur (3-1), les tubes en acier au carbone (3-5) sont perforés de trous (3-6) ayant chacun un diamètre de 4 cm avec des intervalles de 5 cm de sorte que la chaleur générée à partir des serpentins de génération de chaleur (3-4) puissent être fournie de manière appropriée au bétail mort.

9. Système de traitement de stabilisation d'un site d'enfouissement de bétail par combustion souterraine in situ conforme à la revendication 3, dans lequel,
chaque puits tubulaire d'extraction (2-4) du dispositif d'extraction sous vide des gaz et des liquides (2) est équipé d'une jauge de sorte qu'il puisse être commandé automatiquement ou manuellement pour permettre la commande de facteurs de fonctionnement.

10. Procédé de traitement de stabilisation d'un site d'enfouissement de bétail par combustion souterraine in situ permettant de se débarrasser de carcasses de porc, de carcasses de bovins et de carcasses de volailles enterrées dans un site d'enfouissement par combustion en utilisant un système de traitement de stabilisation d'un site d'enfouissement de bétail conforme à l'une quelconque des revendications 1 à 9, comprenant :
- une étape de traitement préalable permettant d'abaisser le niveau des eaux souterraines pour augmenter l'efficacité du procédé de combustion souterraine et de traiter les eaux de lessivage provenant des carcasses animales enterrées,
- une étape d'augmentation de la température permettant d'injecter de l'air simultanément au fonctionnement d'un ensemble de tiges de génération de chaleur (3-1) situées dans le site d'enfouissement souterrain, et de fournir une chaleur constante au voisinage des carcasses animales enterrées au moyen de tiges de génération de chaleur (3-1) pour obtenir une condition (∼100°C) dans laquelle l'humidité présente dans les carcasses et l'eau des pores du sol peut être séchée,
- une étape de séchage permettant de fournir de l'air en continu de façon à maintenir la température à 100°C ou évaporer ainsi l'humidité renfermée dans les carcasses et l'eau des pores du sol de sorte qu'une combustion efficace puisse se produire,
- une étape de combustion permettant de brûler les carcasses d'animaux morts dans une plage de température de 200∼850°C par l'hydrogène renfermé dans l'air mis en circulation au voisinage, ou faible quantité d'oxygène pur injectée pour augmenter encore l'efficacité de la combustion, les carcasses animales elles-mêmes devenant une source de chaleur de sorte que de la chaleur se dissipe vers leur voisinage, et
- une étape de stabilisation thermique permettant d'achever la combustion à une température de 100∼250°C en l'absence de substances à brûler après la combustion complète des carcasses animales.

11. Procédé de traitement de stabilisation d'un site d'enfouissement de bétail par combustion souterraine in situ conforme à la revendication 10,
selon lequel,
entre les étapes susmentionnées, le gaz de combustion est recueilli, évacué puis traité par oxydation.

12. Procédé de traitement de stabilisation d'un site d'enfouissement de bétail par combustion souterraine in situ conforme à la revendication 10, comprenant en outre :
une étape consistant à écarter les tiges de génération de chaleur de l'ensemble de tiges de génération de chaleur (3-1) les unes par rapport aux autres d'une distance de 80∼160 cm.
